# EUROPÄISCHE PATENTANMELDUNG

(11) **EP 0 899 845 A2**
(43) Veröffentlichungstag der Anmeldung: **03.03.1999**
(21) Anmeldenummer: 98250306.2
(22) Anmeldetag: 28.08.1998
(51) Int. Cl.: H02H 1/06, H02H 3/093

(54) **Schaltungsanordnung zur Speisung eines Auslösemagneten eines Leistungsschalters**

(30) Priorität: 29.08.1997 DE 19738696
(71) Anmelder: SIEMENS AKTIENGESELLSCHAFT, 80333 München (DE)
(72) Erfinder: Baumgärtl, Ulrich, 13599 Berlin (DE); Röhl, Wolfgang, 13503 Berlin (DE); Franke, Henry, 13189 Berlin (DE)

(57) **Zusammenfassung**

Eine Schaltungsanordnung zur Speisung eines Auslösemagneten (7) eines Leistungsschalters umfaßt einen Stromwandler 3, der in der Hauptstrombahn (1) des Leistungsschalters liegt und ein von dem jeweils fließenden Strom abhängigen Sekundärstrom zum Betrieb einer Auslöseschaltung (5) abgibt. Der Auslösemagnet (7) wird über eine Gleichrichterschaltung (12) und einen als Schaltnetzteil ausgebildeten Impedanzwandler (14) gleichfalls durch den Stromwandler (3) gespeist. Eine Mikroprozessoreinrichtung (6) sorgt für eine solche Steuerung des Impedanzwandlers (14), daß die Wicklung (10) des Auslösemagneten (7) bei einer Auslösung unabhängig von dem Strom in der Hauptstrombahn (1) mit passenden Werten von Strom und Spannung gespeist wird und daher ein zuverlässiges Ansprechen gewährleistet ist.

## Beschreibung

Die Erfindung betrifft eine Schaltungsanordnung zur Speisung eines Auslösemagneten eines Leistungsschalters mit einem Stromwandler und einer durch den Stromwandler zu speisenden Gleichrichterschaltung sowie mit einem in Reihe mit einer Wicklung des Auslösemagneten geschalteten steuerbaren Schalter, wobei zur Betätigung des steuerbaren Schalters eine Auslöseschaltung vorgesehen ist.

Eine Schaltungsanordnung mit diesen Merkmalen ist z. B. durch die US 4 208 693 bekanntgeworden. Während hierbei die zur Betätigung des Auslösemagneten benötigte elektrische Energie in einem Kondensator zwischengespeichert wird, ist es auch bekannt, daß der Auslösemagnet direkt von dem Sekundärstrom des zu dem Leistungsschalter gehörenden Stromwandlers (bzw. der Stromwandler, wenn es sich um einen mehrpoligen Leistungsschalter handelt) gespeist werden kann (US 5 369 542 A). Diese Schaltung hat den Vorteil, daß die Auslösung mit der geringsten möglichen Verzögerung erfolgt, weil die Zeitkonstante für die Aufladung des erwähnten Kondensators entfällt. Anderseits erfordert es der große Unterschied zwischen den kleinsten und den größten Strömen, bei denen eine Auslösung durchzuführen ist, eine Überlastung des Auslösemagneten durch hohe Sekundärströme des Stromwandlers beim Auftreten eines Kurzschlusses im Laststromkreis des Leistungsschalters zu verhindern. Dies geschieht nach der genannten US 5 369 542 A durch einen Auslösemagneten mit zwei Wicklungen, von denen die eine Wicklung verhältnismäßig wenige Windungen mit einem verhältnismäßig großen Querschnitt und die andere Wicklung verhältnismäßig viele Windungen mit einem verhältnismäßig kleinen Querschnitt aufweist. In Abhängigkeit von dem jeweils fließenden Sekundärstrom des Stromwandlers wird aufgrund einer selbsttätigen Steuerung die eine oder die andere Wicklung zur Auslösung benutzt.

Ein Auslösemagnet mit zwei unterschiedlichen Wicklungen ist jedoch kein Standardbauelement und kann daher nicht unbeträchtliche Mehrkosten verursachen, die sowohl durch die Besonderheit seiner Konstruktion als auch durch das größere Volumen bedingt sind, das für den Einbau des Auslösemagneten in dem Leistungsschalter freigehalten werden muß.

Hiervon ausgehend liegt der Erfindung die Aufgabe zugrunde, eine Auslösung mit möglichst geringer Verzögerung ähnlich wie bei der Schaltungsanordnung nach der genannten US 5 369 542 A unter Verwendung eines Auslösemagneten mit geringen Abmessungen zu ermöglichen.

Gemäß der Erfindung wird diese Aufgabe dadurch gelöst, daß zwischen die Gleichrichterschaltung und die Wicklung des Auslösemagneten ein Impedanzwandler mit variabler Eingangsimpedanz zur Anpassung der jeweils von dem Stromwandler bereitgestellten Ströme und Spannungen an die Betriebswerte der Wicklung des Auslösemagneten geschaltet ist.

Die nach der Erfindung gestaltete Schaltungsanordnung zeichnet sich dadurch aus, daß eine stufenlose Anpassung der Ausgangsgrößen des Stromwandlers an die Betriebskennwerte des Auslösemagneten ermöglicht wird. Ferner kann die Wicklung des Auslösemagneten nach Bauvolumen und Ansprechverhalten optimiert werden. Somit wird im gesamten Bereich der vorkommenden Ströme das gleiche günstige Verhalten bei der Auslösung erzielt.

Im Rahmen der Erfindung kann der Impedanzwandler als Steuerbares Schaltnetzteil ausgebildet sein, wobei dem Schaltnetzteil zur Veränderung der Eingangsimpedanz durch eine Zu der Auslöseschaltung gehörende Mikroprozessoreinrichtung Steuergrößen zuführbar sind. Schaltnetzteile sind in zahlreichen, insbesondere auch für die Zwecke der Erfindung geeigneten Ausführungen bekannt, z.B. nach der WO 96/21893 oder der EP 0 170 293 A.

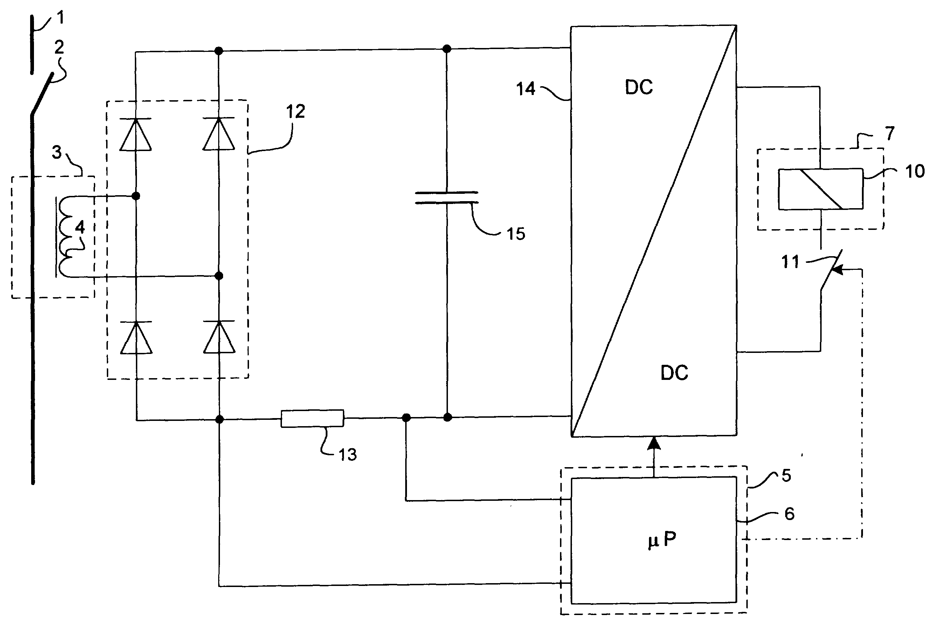

Die Erfindung wird im folgenden anhand des in der Figur gezeigten Ausführungsbeispieles einer Schaltungsanordnung erläutert.

Die in der Figur gezeigte Schaltungsanordnung gehört zum Auslösesystem eines Niederspannungs-Leistungsschalters, der nicht vollständig gezeigt ist. Dargestellt ist jedoch schematisch eine Hauptstrombahn 1 mit einem Schaltkontakt 2 und einem Stromwandler 3. In bekannter Weise weisen mehrpolige Leistungsschalter dementsprechend mehrere Hauptstrombahnen mit Schaltkontakten und Stromwandlern auf. Eine Sekundärwicklung 4 des gezeigten Stromwandlers 3 dient einerseits zur Gewinnung eines dem Strom in der Hauptstrombahn 1 entsprechenden Signals, das einer Auslöseschaltung zugeführt wird. Geeignete Auslöseschaltungen sind in zahlreichen geeigneten Ausführungen bekannt und bedürfen daher im Rahmen der vorliegenden Anmeldung keiner näheren Erläuterung. Gleichfalls ist es bekannt, zur Verarbeitung des genannten, dem Strom entsprechenden Signals und bestimmter für die Auslösung maßgeblicher Parameter eine Mikroprozessoreinrichtung 6 zu verwenden, die in der Figur als Bestandteil der Auslöseschaltung 5 gezeigt ist. Gleichfalls dient die Sekundärwicklung 4 zur Bereitstellung einer Hilfsenergie zum Betrieb der Auslöseschaltung 5 und eines Auslösemagneten 7, der eine Wicklung 10 aufweist. In Reihenschaltung mit der Wicklung 10 liegt ein steuerbarer Schalter 11, dem ein Steuersignal durch die Auslöseschaltung 5 zuführbar ist.

Das erwähnte, vom Strom in der Hauptstrombahn 1 abhängige Signal und die Hilfsenergie werden aus einer mit der Sekundärwicklung 4 verbundenen Gleichrichterschaltung 12 entnommen. An einem Meßwiderstand 13 wird eine Spannung abgegriffen, die von dem Eingangsstrom eines durch die Gleichrichterschaltung 12 gespeisten Impedanzwandlers 14 abhängig ist, der als Schaltnetzteil ausgebildet ist. Der Impedanzwandler 14 setzt variable Eingangsgrößen von Strom und Spannung, wie sie an der Sekundärwicklung 4 des Stromwandlers 3 im Betrieb der Hauptstrombahn 1 auftreten können, in Ausgangsgrößen um, wie sie für den Betrieb des Auslösemagneten 7 geeignet sind. Der Impedanzwandler 14 ist hierzu als Gleichstrom-Gleichstrom-Schaltnetzteil ausgebildet. Da von der Gleichrichterschaltung 12 ein pulsierender Gleichstrom abgegeben wird, ist parallel zum Eingang des Impedanzwandlers 14 ein Glättungskondensator 15 geschaltet. Dieser stellt jedoch keinen Energiespeicher wie bei den eingangs erwähnten Schaltungsanordnungen dar, die einen Kondensator als Zwischenspeicher für die zur Betätigung des Auslösemagneten benötigte Energie enthalten. Im Unterschied zu diesen bekannten Schaltungsanordnungen wird daher der Auslösemagnet 7 praktisch unverzögert betätigt, wenn der steuerbare Schalter 11 durch die Auslöseschaltung beaufschlagt wird.

## Patentansprüche

1. Schaltungsanordnung zur Speisung eines Auslösemagneten (7) eines Leistungsschalters mit einem Stromwandler (3) und einer durch den Stromwandler (3) zu speisenden Gleichrichterschaltung (12) sowie mit einem in Reihe mit einer Wicklung (10) des Auslösemagneten (7) geschalteten steuerbaren Schalter (11), wobei zur Betätigung des steuerbaren Schalters (11) eine Auslöseschaltung (5) vorgesehen ist,
**dadurch gekennzeichnet,** daß
zwischen die Gleichrichterschaltung (12) und die Wicklung (10) des Auslösemagneten (7) ein Impedanzwandler (14) mit variabler Eingangsimpedanz zur Anpassung der jeweils von dem Stromwandler bereitgestellten Ströme und Spannungen an die Betriebswerte der Wicklung (10) des Auslösemagneten ( 7) geschaltet ist.

2. Schaltungsanordnung nach Anspruch 1,
**dadurch gekennzeichnet,** daß
der Impedanzwandler als steuerbares Schaltnetzteil ausgebildet ist und daß dem Schaltnetzteil zur Veränderung der Eingangsimpedanz durch eine zu der Auslöseschaltung gehörende Mikroprozessoreinrichtung Steuergrößen zuführbar sind.
